# EUROPEAN PATENT APPLICATION

(11) **EP 1 954 068 A1**
(43) Date of publication of application: **06.08.2008**
(21) Application number: 06822828.7
(22) Date of filing: 01.11.2006
(51) Int. Cl.: H04Q 7/22

(54) **MOBILE STATION AND HANDOVER CONTROL METHOD**

(30) Priority: 02.11.2005 JP 2005348426
(71) Applicant: NTT DoCoMo, Inc., Chiyoda-ku Tokyo 100-6150 (JP)
(72) Inventor: IWAMURA, Mikio c/o IP Department, NTT DoCoMo, Inc., Chiyoda-ku, Tokyo 100-6150 (JP); UMESH, Anil c/o IP Department, NTT DoCoMo, Inc., Chiyoda-ku, Tokyo 100-6150 (JP); ISHII, Minami c/o IP Department, NTT DoCoMo, Inc., Chiyoda-ku, Tokyo 100-6150 (JP); NAKAMURA, Takehiro c/o IP Department, NTT DoCoMo, Inc., Chiyoda-ku, Tokyo 100-6150 (JP)
(74) Representative: HOFFMANN EITLE
(86) International application number: PCT/JP2006/321908
(87) International publication number: WO 2007/052721

(57) **Abstract**

A mobile station according to the present invention includes: a radio quality measurement unit 121 a configured to obtain radio quality data that indicates a radio quality of a communication link between the mobile station and a base station; a handover measurement unit 161 a configured to measure a communication status of a neighbour cell, when the radio quality data satisfies a predetermined condition; and a transmitter unit 181 configured to transmit, to a radio access network apparatus, based on a measurement result of the communication status, a command or the measurement result of the communication status, the command for instructing the radio access network apparatus to change a connection of a cell from a first cell to which the mobile station is currently connected, to a second cell different from the first cell.

## Description

### Technical Field.

The present invention relates to mobile stations and handover control methods,

### Background Art

In a conventional mobile communication system, in order to perform a handover, a mobile station UE measures a communication status of a link between the mobile station UE and a neighbour cell. Then, on the basis of the measurement result, a radio access network (hereinafter referred to as RAN) transmits, to the mobile station UE, a command for instructing the mobile station to change a cell to connect. Thus, the mobile station UE changes a cell connection in response to the command from the RAN.

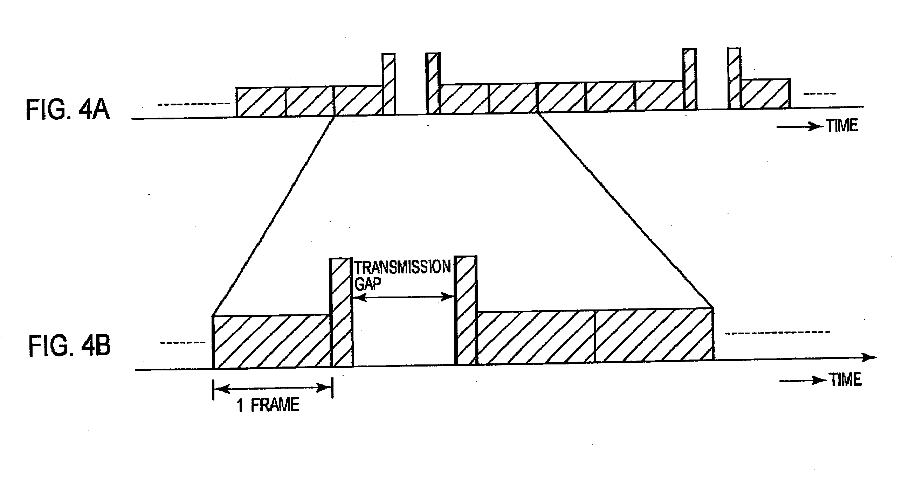

Specifically, by using a compressed mode as shown in Fig. 4, the mobile station UE periodically measures, as the communication status of the neighbour cell, the communication status (a measurement value of a propagation loss, a reception power, a signal-to-interference ratio, and the like) of the link between the mobile station UE and the neighbour cell. The compressed mode is one of methods used for measuring the communication status of the neighbour cell, in order to perform the handover.

Further description of the compressed mode will be given in reference to Fig. 4. Note that Fig. 4 (b) is an enlarged view of a portion of Fig. 4 (a).

When the mobile station UE performs the handover, the mobile station UE measures the communication status of the neighbour cell. In general, the mobile station UE only includes a single communication device, and thus cannot measure the communication status of the neighbour cell during data communication.

Accordingly, on a link between the mobile station UE and a base station, the mobile station UE suspends a transmission in a frame (stopping the transmission from the base station) for a predetermined period, and creates a transmission gap. Thus, the mobile station UE measures a communication status of the link between the mobile station UE and the base station which controls the neighbour cell.

According to 3GPP specification, for example, a communication status of a common pilot channel transmitted from a base station is measured as the communication status of the neighbour cell.

Conventionally, the mobile station UE transmits the measurement result of communication statuses of an own cell and the neighbour cell, to the RAN through a radio interface, on a regular basis or when a predetermined condition (e.g., the measurement value exceeding a threshold) is satisfied.

Based on these measurement results, the RAN determines that the mobile station UE needs to change the cell connection, from the cell to which the mobile station UE is currently connected, to a different cell. Then, the RAN transmits a command for instructing the mobile station UE to change the cell connection, at an appropriate timing.

When the above-described command is received, the mobile station UE changes the cell connection. The handover is thus performed in the conventional mobile communication system (refer to Non-patent Document 1 and Non-patent Document 2, for examples).

However, according to the conventional mobile communication system, in the compressed mode shown in Fig. 4, for example, In order to measure the communication statuses of the own cell and the neighbour cell, the mobile station UE is required to suspend the transmission in the frame (stopping the transmission from the base station) for the predetermined period, on the link between the mobile station UE and the base station. Then, the mobile station UE is required to create the transmission gap. The transmission gap causes a problem of deterioration in a throughput.

Additionally, in order to perform the handover, the mobile station UE frequently measures the communication status of the neighbour cell, and transmits the measurement result to the base station for every measurement. Thus, a problem arises that a large amount of resource is required.
Non-patent Document 1;3GPP TSG-RAN TS25,212 v6.6.0
Non-patent Document 2: "W-CDMA mobile communication systems" edited by Keiji Tachikawa, p.140

### Disclosure of the Invention

The present invention has been made in view of the above problems, and has an object of providing a mobile station and a handover control method, which can reduce deterioration in the throughput on the link between the mobile station and the base station when a handover is performed, and use less resource for performing the handover.

A first aspect of the present invention is summarized as a mobile station, including a radio quality measurement unit configured to obtain radio quality data that indicates a radio quality of a communication link between the mobile station and a base station; a handover measurement unit configured to measure a communication status of a neighbour cell, when the radio quality data satisfies a predetermined condition; and a transmitter unit configured to transmit, to a radio access network apparatus, based on a measurement result of the communication status, a command or the measurement result of the communication status, the command for instructing the radio access network apparatus to change a connection of a cell from a first cell to which the mobile station is currently connected, to a second cell different from the first cell.

A second aspect of the present invention is summarized as a handover control method of a mobile station, including: obtaining radio quality data that indicates a radio quality of a communication link between the mobile station and a base station; measuring a communication status of a neighbour cell when the radio quality data satisfies a predetermined condition; and transmitting, to a radio access network apparatus, based on a measurement result of the communication status, a command or the measurement result of the communication status, the command for instructing the radio access network to change a connection from a first cell to which the mobile station is connected, to a second cell different from the first cell.

### Brief Descriptions of the Drawings

[Fig. 1] Fig. 1 is an overall configuration diagram of a mobile communication system according to a first embodiment of the present invention.
[Fig. 2] Fig. 2 is a functional block diagram of a mobile station of the mobile communication system according to the first embodiment of the present invention.
[Fig. 3] Fig. 3 is a functional block diagram of the mobile station of the mobile communication system according to a second embodiment of the present invention.
[Fig. 4] Fig. 4 is a diagram of a compressed mode for describing a conventional invention.

### Best Modes for Carrying out the Invention

### (A mobile communication system according to a first embodiment of the present invention)

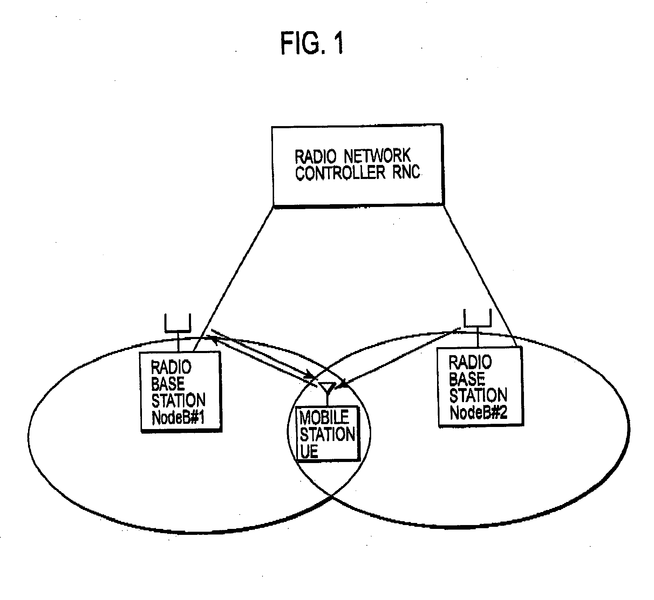

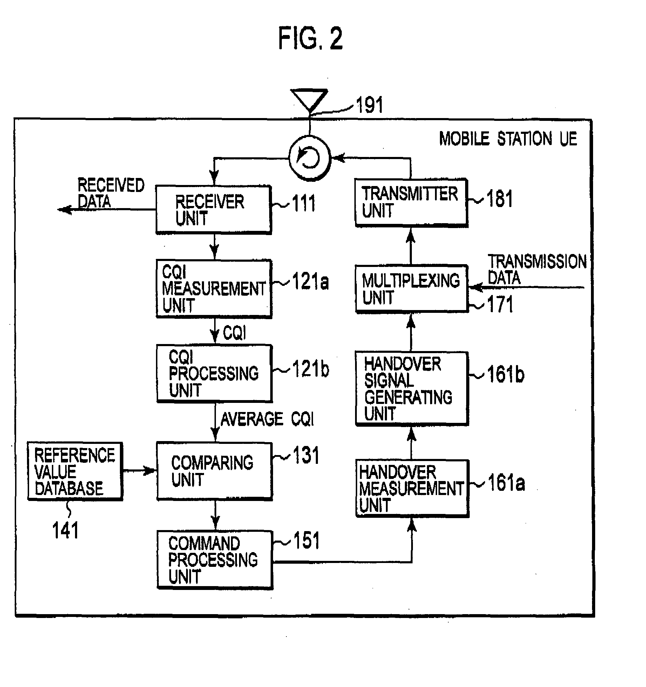

A radio access network apparatus according to a first embodiment of the present invention will be described with reference to Figs. 1 and 2.

In an example of Fig. 1, a mobile station UE forms a link between the mobile station UE and a cell controlled by a radio base station Node B #1. The mobile station UE is configured to measure a radio quality of the cell in which the mobile station UE is located and controlled by the radio base station Node B #1. Further, the mobile station UE is configured to measure a radio quality of a cell controlled by the radio base station Node B #2. The mobile station UE is configured to transmit, to the radio base station Node B #1, a CQI (Channel Quality Indicator) which indicates the radio quality.

In the example of Fig. 1, the mobile station UE is connected to the cell controlled by the radio base station Node B #1 via a link.

However, when the radio base station Node B #1 receives the CQI from the mobile station UE and when the received CQI satisfies a predetermined condition, the radio base station Node B #1 instructs the mobile station UE to initiate a measurement of radio qualities of multiple links which connect the mobile station UE with the radio base station Node B #1 and the radio base station Node B #2, respectively.

When the measurement result of the communication statuses is received, the radio base station Node B #1 selects the most appropriate cell to be connected with the mobile station UE, and instructs the mobile station UE to change a cell connection.

When the above-described instruction is received, the mobile station UE changes the cell connection, from the cell to which the mobile station UE is currently connected, to a different cell. The mobile station UE is configured to perform a handover as described above.

A radio network controller RNC of the present invention is an apparatus located in an upper level than the radio base station Node B, and is configured to control a radio communication between the mobile station UE and the radio base station Node B.

In the present embodiment, the radio network controller RNC and the radio base stations Node B are collectively called as a radio access network apparatus.

Further description will be given by using Fig. 2 for functions of the radio access network apparatus, which obtains the CQI from the mobile station UE and instructs the mobile station UE to measure the communication status.

Although Fig. 2 is described in relation to the radio base station Node B #1 in the access network apparatus of the present invention, it should be noted that in the radio access network apparatus according to the present invention, part of the functions may be included in the radio network controller RNC, and each of the other base stations Node B has similar functions.

Fig. 2 shows a schematic configuration example of the mobile station UE according to the present embodiment. As shown in Fig. 2, the mobile station UE is provided with a receiver unit111, a CQI measurement unit 121a, a CQI processing unit 121b, a comparing unit 131, a reference value database 141, a command processing unit 151, a handover measurement unit 161a, a handover signal generating unit 161b, a multiplexing unit 171, a transmitter unit 181, and a transmitting and receiving antenna 191.

Note that each of these components is not necessarily be implemented as an individual hardware. In other words, the components may be combined, or may be configured through a process of software.

The receiver unit111 is configured to receive downlink data from the radio access network through a downlink.

Additionally, the receiver unit 111 is configured to transfer, to the CQI measurement unit 121a, a radio wave received through the downlink.

The CQI measurement unit 121a is configured to receive the radio wave from the receiver unit 111. Further, the CQI measurement unit 121 a is configured to instantaneously measure a signal-to-interference ratio (hereinafter referred to as SIR), a reception power, a propagation loss or the like, and to transfer radio quality data to the CQI processing unit 121 b. In this regard, the reception power, the propagation loss or the like indicate a radio quality of a communication link between the mobile station UE and the radio base station Node B.

Here, "CQI" is a collective term covering sets of feedback information, and is used to deal with high-speed variance in propagation (such as high-speed fading) during communications.

Specifically, the CQI includes the signal-to-interterence ratio (herein after referred to as SIR), which is instantaneously measured by the mobile station UE, an instantaneous reception power, an instantaneous propagation loss, and the like.

For instance, in the WCDMA (Wideband Code Division Multiple Access) scheme, the mobile station UE is configured to measure a binary SIR and transmit the measured binary SIR to the radio base station Node B #1 that controls an own cell.

Similarly, in the HSDPA (High-speed Downlink Packet Access) scheme, the mobile station UE is configured to measure an instantaneous SIR, and transmit a quantized CQI to the radio base stations Node B that controls the cell to which the mobile station UE is connected.

Here, it is defined that a large CQI indicates a favorable communication status between the mobile station UE and the cell controlled by the radio base station Node B #1, while a small CQI indicates an unfavorable communication status therebetween.

The CQI processing unit 121 b calculates an average CQI that indicates an average value of instantaneously measured CQI data, and transfers the average CQI to the comparing unit 131.

In this way, the comparing unit 131 is allowed to compare the average CQI with an average CQI threshold value, while avoiding excessive influence of an instantaneous variance In the radio quality data. Here, the average CQI threshold value is obtained from the reference value database 141.

In this regard, the average CQI is not necessarily the average value of the CQI. Alternatively, other values can be used as the average CQI, as long as the instantaneous variance in the radio quality data can be smoothed.

The comparing unit 131 is configured to compare the average CQI obtained from the CQI processing unit 231, with the average COI threshold value obtained from the referenced value database 141.

When the average CQI is smaller than the average CQI threshold value, the comparing unit 131 transfers, to the command processing unit 151, a measurement command for instructing an initiation of a measurement of communication statuses of links that connect the mobile station UE and each of the multiple cells in which the mobile station UE is located.

On the other hand, when the average CQI is larger than the average CQI threshold value, the comparing unit 131 transfers, to the command processing unit 151, a measurement termination command for instructing a termination of the measurement of the communication statuses of the links that connect the mobile station UE and each of the multiple cells in which the mobile station UE is located.

The reference value database 141 includes the average CQI threshold value. The average CQI threshold value may be a predetermined value, or may be a reference value calculated based on previous average CQI. Further, the average CQI threshold value used when the measurement of the communication status is initiated may differ from the average CQI threshold value used when the measurement of the communication status is terminated.

When a control command obtained from the comparing unit 131 is the measurement command, the command processing unit 151 is configured to transfer, to the handover measurement unit 161a, the measurement command for instructing the handover measurement unit 161 to initiate the measurement of the communication statuses of the links that connect the mobile station UE and each of the multiple cells in which the mobile station UE is located.

When the control command obtained from the comparing unit 131 is the measurement termination command, the command processing unit 151 is configured to transfer, to the handover measurement unit 161a, the measurement termination command for instructing the handover measurement unit 161a to terminate the measurement of the communication statuses of the links that connect the mobile station UE and each of the multiple cells in which the mobile station UE is located.

The handover measurement unit 161 a is configured to receive a control command from the command processing unit 151. When the control command received from the command processing unit 151 is the measurement command, the handover measurement unit 161a is configured to initiate the measurement of the communication statuses of the links that connect the mobile station UE and each of the multiple cells in which the mobile station UE is located, and to transfer the handover measurement result to the handover signal generating unit 161 b.

When the control command received from the command processing unit 151 is the measurement termination command, the handover measurement unit 161 a is configured to terminate the measurement of the communication statuses of the links that connect the mobile station UE and each of the multiple cells in which the mobile station UE is located.

The handover signal generating unit 161 b is configured to receive the handover determination result from the handover measurement unit 161 a, and to transfer, to the multiplexing unit 171, the handover determination result or a handover command. Here, the handover command instructs the radio access network to perform a handover.

The multiplexing unit 171 is configured to receive, from the handover signal generating unit 161 b, a handover command along with transmission data (such as user data or control data), or the handover measurement result. The multiplexing unit 171 then performs a process of multiplexing the received data and converting the data into a signal having a radio frequency band, and transfers the signal to the transmitter unit 181.

The transmitter unit 181 is configured to amplify the signal obtained from the multiplexing unit 171, and to transmit the amplified signal to the radio access network apparatus through the transmitting and receiving antenna 191.

### (Effects and advantages of the mobile communication system according to the first embodiment of the present invention)

The radio access network apparatus according to the first embodiment of the present invention is provided with a receiver unit 211, a command generating unit 261 and a transmitter unit 281. The receiver unit 211 obtains radio quality data from the mobile station UE. The command generating unit 261 generates a measurement command for instructing the mobile station UE to initiate a measurement of the communication status of the link that connects the mobile station UE with the radio base station Node B, when the radio quality data satisfies a predetermined condition. The transmitter unit 281 transmits the measurement command to the mobile station UE.

According to the above configuration, the mobile station UE does not need to frequently measure the communication status between the mobile station UE and the own cell, and the communication status between the mobile station UE and the neighbour cell. Instead, only when the radio quality data satisfies the predetermined condition, the mobile station UE needs to measure the communication status between the mobile station UE and the own cell, and the communication status between the mobile station UE and the neighbour cell. Accordingly, amount of processes required for performing a handover can be reduced.

In other words, it is possible to provide a radio access network that can reduce the amount of processes and resources required for performing the handover at a mobile station UE,

Moreover, the mobile station UE of the first embodiment of the present invention includes the CQI measurement unit 121 a, the handover measurement unit 161a, and the transmitter unit 181. The CQI measurement unit 121 a obtains the radio quality data that indicates the radio quality of the communication links between the mobile station UE and the radio base stations Node B. The handover measurement unit 161 a measures the communication status of the neighbour cell when the radio quality data satisfies the predetermined condition. According to the measurement result of the communication status, the transmitter unit 181 transmits, to the radio access network apparatus, the measurement result of the communication status or the command for instructing the radio access network apparatus to change the connection from a first cell to a second cell. Here, the first cell is the cell to which the mobile station UE is currently connected, and the second cell is the cell different from the first cell.

According to this configuration, since the mobile station UE measures the radio quality of the communication link between the mobile station UE and the radio base station Node B, the mobile station UE can grasp the communication statuses of the multiple cells to which the mobile station UE is currently connected, without frequently using the measurement result of the communication status of the neighbour cell.

Furthermore, when the radio quality data satisfies the predetermined condition, the mobile station UE can determine whether or not to perform a handover by measuring the communication status of the neighbour cell, without using the compressed mode shown in Fig. 4.

Additionally, the mobile station UE can perform the handover without interacting with the radio access network apparatus.

In other words, according to the mobile station of the first embodiment, It is possible to reduce deterioration in throughput of the link between the mobile station and the base station when the handover is performed, and to use less resource of the mobile station for performing the handover.

### (A mobile communication system according to a second embodiment of the present invention)

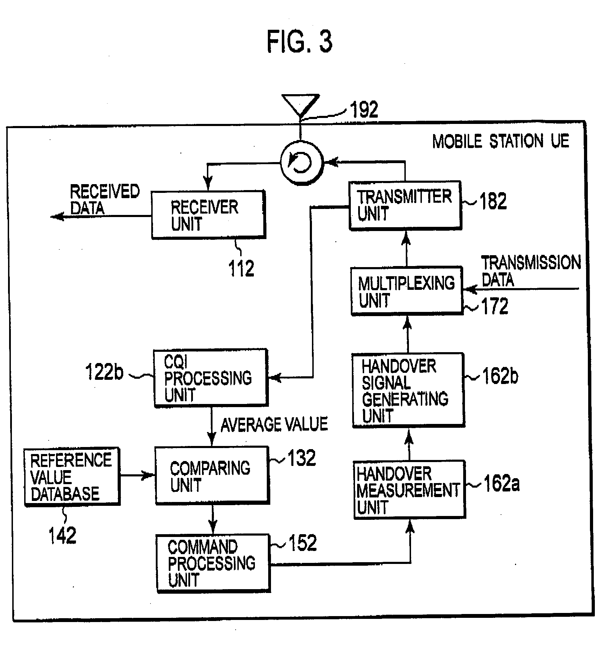

A radio access network apparatus according to a second embodiment of the present invention will be described with reference to Fig. 3.

In the example of Fig. 3, a process performed by a CQI processing unit 122b of a mobile station UE is mainly different from the radio access network apparatus of the first embodiment.

Specifically, the CQI processing unit 122b is configured to obtain a transmission power or transmission rate information from a transmitter unit 182.

The CQI processing unit 122b is configured to obtain the transmission power or the transmission rate information from the transmitter unit 182, to calculate an average value I of the transmission power or the transmission rate information, and transfers the calculated average value I to a comparing unit 132.

In this regard, the average value I is not necessarily the average value of the transmission power or the transmission rate information. Alternatively, other values can be used as the average value I, as long as the value is unaffected from the variance in each of the transmission power and the transmission rate information.

The comparing unit 132 is configured to compare the average value I obtained from the CQI processing unit 122b with an average value I threshold value obtained from a reference value database 142.

As described above, by using the transmission power or the transmission rate information as the CQI, the mobile station UE does not need to frequently measure the communication statuses of the own cell and the neighbour cell. Instead, only when the radio quality data satisfies a predetermined condition, the mobile station UE needs to measure the communication statuses of the own cell and the neighbour cell. Additionally, processes to perform the handover can be reduced.

### Industrial Applicability

As has been described, according to the present invention, it is possible to provide a mobile station and a handover control method, which can reduce deterioration in throughput on the link between the mobile station and the base station when a handover is performed, and use less resource for performing the handover.

## Claims

1. A mobile station, comprising:
a radio quality measurement unit configured to obtain radio quality data that indicates a radio quality of a communication link between the mobile station and a base station;
a handover measurement unit configured to measure a communication status of a neighbour cell, when the radio quality data satisfies a predetermined condition; and
a transmitter unit configured to transmit, to a radio access network apparatus, based on a measurement result of the communication status, a command or the measurement result of the communication status, the command for instructing the radio access network apparatus to change a cell connection from a first cell to which the mobile station is currently connected, to a second cell different from the first cell.

2. A handover control method of a mobile station, comprising:
obtaining radio quality data that indicates a radio quality of a communication link between the mobile station and a base station:
measuring a communication status of a neighbour cell when the radio quality data satisfies a predetermined condition; and
transmitting, to a radio access network apparatus, based on a measurement result of the communication status, a command or the measurement result of the communication status, the command for instructing the radio access network to perform a handover from a first cell to which the mobile station is connected, to a second cell different from the first cell.
